# EUROPEAN PATENT SPECIFICATION

(11) **EP 1 997 170 B1**
(45) Date of publication and mention of the grant of the patent: **08.06.2016**
(21) Application number: 07722935.9
(22) Date of filing: 26.02.2007
(51) Int. Cl.: H01M 4/16, H01M 4/20

(54) **PROCESS FOR PRODUCING BATTERY ELECTRODES, ELECTRODES PRODUCED BY THIS PROCESS, AND BATTERIES CONTAINING SUCH ELECTRODES**
PROZEß ZUR HERSTELLUNG VON BATTERIEELEKTRODEN, DURCH DIESEN PROZEß HERGESTELLTE ELEKTRODEN UND SOLCHE ELEKTRODEN ENTHALTENDE BATTERIEN
PROCÉDÉ POUR FABRIQUER DES ÉLECTRODES DE BATTERIES, ÉLECTRODES PRODUITES PAR CE PROCÉDÉ ET BATTERIES CONTENANT DE TELLES ÉLECTRODES

(30) Priority: 15.03.2006 IT BG20060015
(43) Date of publication of application: 03.12.2008
(73) Proprietor: P.C. di POMPEO CATELLI S.r.l., 22029 Uggiate Trevano (CO) (IT)
(72) Inventor: CATELLI, Cesare, I-22029 Uggiate Trevano (IT); GELBKE, Manfred, 96231 Bad Staffelstein (DE)
(74) Representative: Gatti, Enrico
(86) International application number: PCT/EP2007/001623
(87) International publication number: WO 2007/104416

(56) References cited:
- DE-A1- 2 417 524
- JP-A- 1 186 572
- JP-A- 1 294 360
- JP-A- 10 199 562
- JP-A- 54 013 704
- JP-A- 54 057 133
- JP-A- 57 162 260
- JP-A- H06 176 761
- US-A- 6 143 441

## Description

### TECHNICAL FIELD

The present invention relates to a process for producing battery electrodes, electrodes produced by this process, and batteries containing such electrodes, in accordance with the introduction to the main claims.

### PRIOR ART

Batteries used for example for vehicle starting are generally formed from a plurality of cells comprising in their interior a positive electrode and a negative electrode, which are in the form of two facing plates. Between the two electrodes an electrolyte (sulphuric acid) is present together with a microporous separator to enable the ions and charges to move freely. These electrodes present an internal structure formed from a support, generally a lead grid, for current conduction. The support grid can be formed in various ways, for example gravity cast, continuously cast on a drum, expanded from a lead strip or perforated by means of suitable equipment. An active paste consisting of a mixture of lead, lead oxide, sulphuric acid, water and certain additives is spread onto this support grid. The active paste mix is prepared by a suitable industrial mixer, to obtain good density, wetness, porosity and consistency characteristics. This paste is suitably spread onto the grid by a spreading machine, the properties of the active paste enabling it to properly fill the grid holes and to adhere to the grid surface.

After the spreading operation the plates are pressed to improve contact between the active paste and the grid surface.

The plates are then inserted into a rapid drying oven to reduce the moisture content of the active paste. This rapid drying process also triggers an exothermic reaction with formation of lead oxide and lead hydroxide, in addition to other compounds, which heats the plate and induces changes in the structure of the active paste mass.

The plates are then subjected to a curing operation in suitable chambers, during which oxidation of the lead present in the active paste is completed, at the end of this process this latter solidifying to become active material. The plates are generally disposed side by side for curing, the mutually facing surfaces hence being able to adhere to each other. For this reason, the plates are sometimes separated by sheets, for example of paper.

As the lead reaction is exothermic, once triggered during the rapid drying process it proceeds until lead oxidation is complete, or until the oxygen and the water from which the oxygen is obtained are exhausted. This reaction is triggered in any event, even in the absence of rapid oven drying, however the presence of an excessive water quantity in the mix would result in too lengthy a curing time.

If drying is too rapid or too intense, the chemical reaction ceases due to lack of hydroxyls and hydrogen ions and there is poor adhesion between the grid and the active material, which determines the plate life during battery operation. The temperature and drying pattern also determine which lead sulphates will be present in the cured plates, the structure and the hardness of the active material. When the reaction ceases due to lack of water, the structure of the material surrounding the lead particles undergoes irreversible change, and the reaction cannot be reactivated even by re-wetting the plate.

Too intense drying can be the result of excessive oven heating due for example to a pause in the mixer. Hence different electrode qualities may result even if products have the same mix and are subjected to the same drying and curing process.

The document JP 57 162260 discloses a pasted lead electrode plate prepared by packing a paste made of lead used as an active material into a base plate by a usual method. Next, porous silica is dispersed over the electrode plate packed with the paste. After that, the main part of the silica is buried into the electrode plate by pressing the silica.

The document DE 2417524 discloses a method to collect moisture on a wet plate of lead-acid battery by applying hydrous magnesium sulfate or monohydrate on the surface.

### DISCLOSURE OF THE INVENTION

An object of the present invention is therefore to provide a process by which the stated drawbacks are overcome, one object in particular being to eliminate the risk of excessive water loss from the active paste. Another object is to achieve a more homogeneous active paste.

Another object is to save energy.

A further object is to achieve a more simple and attainable process with a less costly group of machines:
A further object of the invention is to reduce temperature and moisture variations in the fresh plates to improve the quality of the electrodes,
which present the characteristic of functioning better than those currently produced, the electrodes produced by the process of the invention and the battery formed with said electrodes also being aspects of the invention itself.

Said objects are attained by a process, by electrodes and by a battery the characteristics of which are defined by the claims.

### BRIEF DESCRIPTION OF THE DRAWINGS

The characteristics and advantages of the present invention will be apparent from the ensuing detailed description of a preferred embodiment thereof, illustrated by way of non-limiting example in the accompanying drawings, in which:

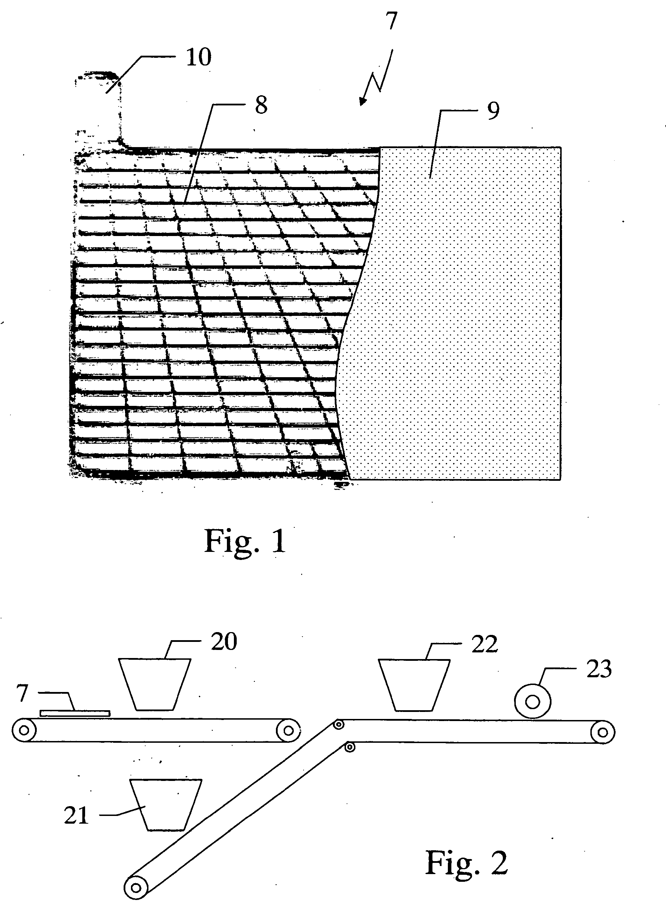

Figure 1 is a front view of a support, on the right side of which an active paste has been spread;
Figure 2 is a schematic view of a machine implementing the process of the present invention.

### BEST MODE FOR CARRYING OUT THE INVENTION

With reference to the accompanying figures, these show an electrode 7 comprising a support 8 in the form of a grid covered with an active paste 9 only on the right portion (for representative clarity). From the figure it can be seen that the support 8 presents a connector 10. The active paste 9 covers substantial the entire support surface with the exception of the connector 10. The active paste 9 is composed mainly of lead, lead oxide, sulphuric acid, water and other additives. It is prepared by a mixing machine and is spread on the grid 8 by a spreader. A powder material, preferably a hygroscopic powder, is deposited on the surface of the active paste, and is represented in the figure by dotting on the active paste surface. The purpose of the powder material is to reduce the surface wetness of the active paste by mechanical, physical or chemical action of the material. The presence of powder material enables the rapid oven drying operation to be avoided, to pass directly to the curing step The process comprises the following steps:
1. preparing an active paste and mixing it in a mixing machine;
2. preparing a support 8, generally a lead grid;
3. disposing the active paste 9 on the support 8 by means of a spreader 20, to form a pasted support;
4. disposing the powder material on the surface of a movable belt by means of a belt duster 21;
5. sliding the pasted support formed by the support 8 and active paste 9 along the movable belt spread with powder material;
6. allowing other powder material to fall onto the pasted support by means of a surface duster 22, to hence cover the entire surface;
7. exerting slight pressure on the surfaces of the pasted support by passing it under a roller 23, in order to increase adhesion of the powder material to the surface of the active paste 9; the powder material absorbs the water of the paste surface by physical or chemical action;
8. withdrawing the pasted support and locating it in a controlled atmosphere environment for the curing step;
9. at the end of curing, the pasted support becomes the electrode ready to be disposed in a battery cell.

In one application of the invention, different powder materials, preferably hygroscopic, can be usefully used, for example talc, powdered oak, powdered paper, cork or silica.

Advantageously the powder material has a particle size between 10 µm and 1000 µm.

The material quantity to be applied varies according to the plate dimensions and hence the surface area to be covered: the range is between 1 and 10 g/m².

The powder material can be used mixed with glass fibres or ground plastic to reinforce the surface of the pasted support and of the finished electrode.

For some applications, the roller used to lightly press the powder material after its deposition on the active paste surface can usefully be heated.

The process involving drying of the pasted support prior to curing is completely eliminated. This represents a large saving both in energy and in electrode plant and production costs. In this respect, the oven drying process consumes about 300,000 kcal/hour, this cost being completely eliminated by using powder material disposed on the active paste surface. The powder present on the active paste surface also prevents the pasted supports from adhering to each other when placed side by side during the curing step.

The present patent also covers the electrode 7 produced by the described process, using powder material. These electrodes, when produced in large quantity, present a statistically lesser defectiveness than those produced by conventional processes which use the normal oven drying process. After the powder drying process, these electrodes present the characteristic of having the powder mainly on the surface.

The present patent also covers an electrode 7 containing powder material, and a battery produced by using at least one of said electrodes.

This powder improves the electrode compactness and prolongs its life. This compactness is further improved if glass fibres or powdered plastic material is used together with the powder.

In another use of the invention, the powder material can be sprayed onto the plate surface by air.

## Claims

1. A process for producing at least one lead battery electrode (1) comprising a support (8) on which an active material is disposed, the process comprising disposing an active paste (9) on the support to form a pasted support, the active paste (9) surface is brought into contact with a powder substance for the purpose of reducing surface wetness by a mechanical, chemical or physical action; said powder substance is a hygroscopic powder; **characterised in that** said process comprises a heated roller press (23) to press and heat said powder substance against the surface of the active paste (9), and said pasted support is subjected to a curing process.

2. A process as claimed in claims 1, **characterised in that** fibres are present in said powder substance to absorb water.

3. A process as claimed in the preceding claim **characterised in that** said powder substance is disposed on the surface of the active paste (9).

4. A process as claimed in claim 1, **characterised in that** said powder substance is sprayed against the surface of the active paste (9) by means of an air stream.

5. A process as claimed in the preceding claim **characterised in that** the active paste is heated during the pressing step.

6. A process as claimed in claim 1, **characterised in that** the size of the constituent powder particles of said powder substance is between 10 µm and 1000 µm.

7. A process as claimed in claim 1, **characterised in that** glass in fibre or powder form is added to said powder substance.

8. A process as claimed in claim 1, **characterised in that** powdered plastic material is added to said powder substance.

9. A lead battery electrode (7) comprising a support (8) and an active material (9) disposed on the support (8), comprising hygroscopic powder material on the active material surface; obtainable by the process of claims 1-8.

10. A lead battery comprising a plurality of electrodes, **characterised by** comprising at least one electrode (7) in accordance with claim 9.

## Patentansprüche

1. Verfahren zum Herstellen wenigstens einer Bleibatterieelektrode (1) mit einem Träger (8), auf dem ein aktives Material angeordnet ist, wobei das Verfahren beinhaltet, eine aktive Paste (9) auf den Träger aufzubringen, um einen mit Paste versehenen Träger zu bilden, wobei die Oberfläche der aktiven Paste (9) mit einer Pulversubstanz in Kontakt gebracht wird zu dem Zweck, um durch eine mechanische, chemische oder physikalische Wirkung Oberflächennässe zu reduzieren, wobei die Pulversubtanz ein hygroskopisches Pulver ist, **dadurch gekennzeichnet, dass** das Verfahren beinhaltet, mit einer geheizten Walzenpresse (23) die Pulversubstanz gegen die Oberfläche der aktiven Paste (9) zu drücken und sie zu erwärmen, und dass der mit Paste versehene Träger einem Härtungsprozess unterzogen wird.

2. Verfahren wie in Anspruch 1 beansprucht, **dadurch gekennzeichnet, dass** in der Pulversubstanz Fasern vorhanden sind, um Wasser zu absorbieren.

3. Verfahren wie in dem vorhergehenden Anspruch beansprucht, **dadurch gekennzeichnet, dass** die Pulversubstanz auf die Oberfläche der aktiven Paste (9) aufgebracht wird.

4. Verfahren wie in Anspruch 1 beansprucht, **dadurch gekennzeichnet, dass** die Pulversubstanz mithilfe eines Luftstroms gegen die Oberfläche der aktiven Paste (9) gesprüht wird.

5. Verfahren wie in dem vorhergehenden Anspruch beansprucht, **dadurch gekennzeichnet, dass** die aktive Paste während des Schritts des Andrückens erwärmt wird.

6. Verfahren wie in Anspruch 1 beansprucht, **dadurch gekennzeichnet, dass** die Größe der der Pulversubstanz konstituierenden Pulverpartikel zwischen 10 µm und 1.000 µm liegt.

7. Verfahren wie in Anspruch 1 beansprucht, **dadurch gekennzeichnet, dass** der Pulversubstanz Glas in Faser- oder Pulverform hinzugefügt wird.

8. Verfahren wie in Anspruch 1 beansprucht, **dadurch gekennzeichnet, dass** der Pulversubstanz pulverisiertes Kunststoffmaterial hinzugesetzt wird.

9. Bleibatterieelektrode (7) mit einem Träger (8) und einem auf dem Träger (8) angeordneten aktiven Material (9), wobei hygroskopisches Pulvermaterial auf der aktiven Materialoberfläche vorhanden ist, erhältlich durch das Verfahren der Ansprüche 1 - 8.

10. Bleibatterie mit einer Mehrzahl von Elektroden, **dadurch gekennzeichnet, dass** wenigstens eine Elektrode (7) gemäß Anspruch 9 vorhanden ist.

## Revendications

1. Processus pour produire au moins une électrode de batterie au plomb (1) comprenant un support (8) sur lequel un matériau actif est disposé, le processus 5 comprenant le dépôt d'une pâte active (9) sur le support pour former un support pâteux, la surface de la pâte active (9) étant amenée en contact avec une substance en poudre afin de réduire l'humidité superficielle par une action mécanique, chimique ou physique ; ladite substance en poudre consistant en une poudre hygroscopique ; **caractérisé en ce que** ledit processus comprend une presse à rouleaux chauffés (23) 10 pour presser et chauffer ladite substance en poudre contre la surface de la pâte active (9), et ledit support pâteux est soumis à un processus de durcissement.

2. Processus selon la revendication 1, **caractérisé en ce que** des fibres sont présentes dans ladite substance en poudre pour absorber l'eau.

3. Processus selon la revendication précédente, **caractérisé en ce que** ladite 15 substance en poudre est disposée sur la surface de la pâte active (9).

4. Processus selon la revendication 1, **caractérisé en ce que** ladite substance en poudre est pulvérisée contre la surface de la pâte active (9) au moyen d'un flux d'air.

5. Processus selon la revendication précédente, **caractérisé en ce que** la pâte 20 active est chauffée pendant l'étape de pressage.

6. Processus selon la revendication 1, **caractérisé en ce que** la taille des particules de poudre constitutives de ladite substance en poudre est entre 10 µm et 1.000 µm.

7. Processus selon la revendication 1, **caractérisé en ce que** du verre sous 25 forme de fibres ou de poudre est ajouté à ladite substance en poudre.

8. Processus selon la revendication 1, **caractérisé en ce qu'**une matière plastique en poudre est ajoutée à ladite substance en poudre.

9. Electrode de batterie au plomb (7) comprenant un support (8) et un matériau actif (9) disposé sur le support (8), comprenant un matériau en poudre 30 hygroscopique sur la surface de matériau actif, pouvant être obtenue par le processus des revendications 1 à 8.

10. Batterie au plomb comprenant une pluralité d'électrodes, **caractérisée en ce qu'**elle comprend au moins une électrode (7) selon la revendication 9.
